# EUROPEAN PATENT SPECIFICATION

(11) **EP 1 864 884 B1**
(45) Date of publication and mention of the grant of the patent: **31.12.2008**
(21) Application number: 07380145.8
(22) Date of filing: 24.05.2007
(51) Int. Cl.: B62B 7/06

(54) **A foldable pushchair for babies and small children**
Zusammenklappbarer Kinderwagen für Säuglinge und Kleinkinder
Poussette pliable de bébés et petits enfants

(30) Priority: 07.06.2006 ES 200601316 U
(43) Date of publication of application: 12.12.2007
(73) Proprietor: JANE S.A., 08184 Palau de Plegamans (Barcelona) (ES)
(72) Inventor: Jane Santamaria, Manuel c/o JANE, S.A., 08184 Palau Solita I Plegamans (Barcelona) (ES)
(74) Representative: Pastells Teixido, Manuel

(56) References cited:
- EP-A- 1 352 803
- FR-A- 812 562
- US-A- 1 727 335
- US-A1- 2004 251 648

## Description

### BACKGROUND OF THE INVENTION

This pushchair is of the type having the two rear legs fitted with the corresponding wheels, in the folded arrangement of the pushchair the wheels with their support being arranged in the prolongation of the legs and having the features as defined in the preamble of claim 1. These features are known from EP 1 352 803 A1.

This make-up is a characterizing feature of the socalled umbrella type pushchairs wherein each of the rear legs is articulately linked at its upper end to a respective arm forming the handlebar and ending in a respective handle, each of the front legs being articulately linked to the lower end of the respective one of said arms, these legs being articulately linked to the rear ones by means of two crossed cross members.

These pushchairs can be folded at the middle portion of their sides, these latter being brought closer together when carrying out the folding of the pushchair but nevertheless having an appreciable length once the pushchair has been fully folded.

### SUMMARY OF THE INVENTION

This invention has as its object a foldable pushchair for babies and small children which is in a position to be folded into a more compactly folded arrangement being mainly achieved thanks to the reduction if its length, this allowing to arrange the pushchair in a less bulky packaging and hence to save transportation costs and to use less space in the warehouses.

The features of this invention are defined in the single claim. The pushchair has the support of the rear wheels fitted to the lower end of the corresponding leg by means of a pin-jointed connection allowing to have said support folded with respect to the leg when folding the pushchair, said support being thus arranged below said leg in said folded arrangement.

The folding of the supports of the rear wheels is obtained in an automatic manner because of their being articulately linked to the rear end of the corresponding crossed cross members linking them to the front legs.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figs. 1 and 2 respectively show in a perspective and a side elevational view a conventional pushchair for babies and small children in an unfolded and a folded arrangement, respectively;
Figs. 3 and 4 are two perspective views showing how the support of the rear wheels is fitted to the corresponding leg as per the invention;
Fig. 5 in a perspective view illustrates the support of the wheels once having been folded in the folding of the pushchair; and
Fig. 6 depicts in a side elevation the arrangement of the support of the rear wheels in the folding of the pushchair.

### DETAILED DESCRIPTION

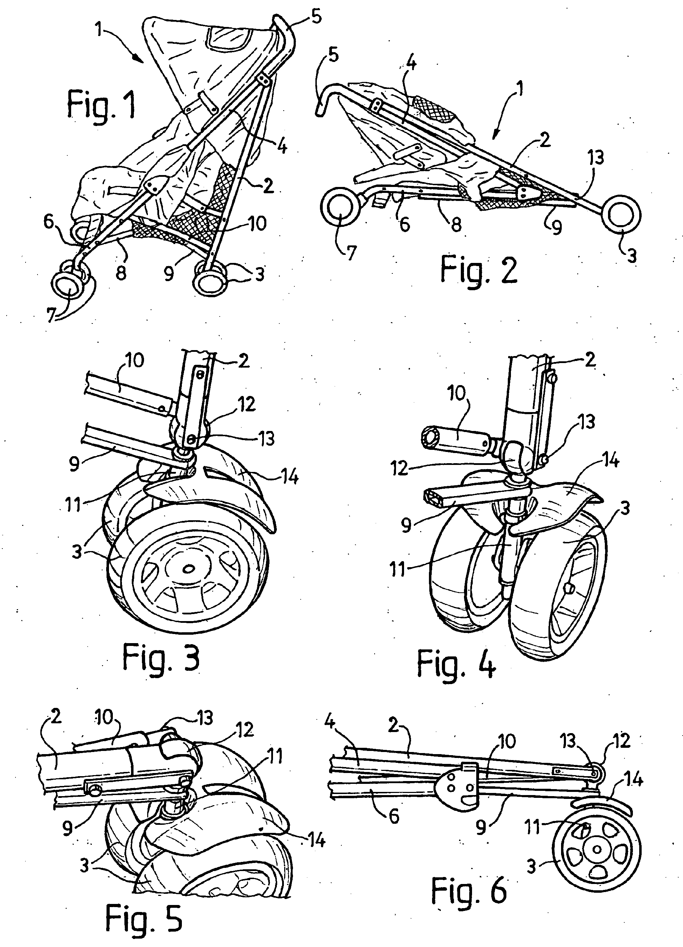

According to the drawings Figs. 1 and 2 illustrate a conventional umbrella type pushchair (1) whose chassis comprises rear legs (2) having the wheels (3) inferiorly fitted to them and being upperly and articulately linked to the arms (4) forming the handlebars and ending in respective handles (5). The arms (4) are inferiorly and articulately fitted to the front legs (6) comprising the corresponding wheels (7). The front legs (6) and the rear legs (2) are articulately connected to each other by means of two crossed cross members (8) and (9), and between the front leg and the rear leg at each side a respective lateral side member (10) is fitted as a support for the seat.

The pushchair being the object of this invention has the support (11) of the wheels (3) fitted to the lower end of the rear legs (2) by means of a pin-jointed connection (12), and is characterized in that the corresponding cross member (9) being articulately linked at its rear end to said support (11), the rear end of the corresponding side member (10) being fitted to the actual pin (13) of the aforementioned pin-jointed connection (12) (Figs. 3 and 4).

As shown in Figs. 5 and 6, when folding the pushchair and because of the fact that the supports (11) of the rear wheels are linked to the crossed cross members (8) and (9) said supports are folded as they turn around the pins (13) of the pin-jointed connections (12) and are finally arranged below the rear legs (2) and thus reduce the overall length of the folded pushchair.

Reference numeral (14) indicates the presence of mudguards possibly equipping the wheels.

## Claims

1. A foldable pushchair for babies and small children comprising a chassis having the rear legs fitted with the corresponding wheels, wherein a support (11) of the wheels (3) is fitted to the lower end of the corresponding rear leg (2) by means of a pin-jointed connection (12) allowing to have said support folded with respect to the leg (2) when folding the pushchair,
**characterized in that** the supports (11) of the wheels (3) are articulately linked to the rear ends of the two crossed cross members (8 and 9) linking the rear legs (2) to the front legs (6).

## Patentansprüche

1. Zusammenfaltbarer Kinderwagen, der ein Chassis umfaßt, das auf den Hinterfüßen die entsprechenden Räder aufweist, wobei ein die Räder (3) tragender Radträger (11) mit dem unteren Ende der Hinterfüße (2) durch ein seine Zusammenfaltung in bezug auf den Fuß (2) beim Zusammenfalten des Kinderwagens erlaubendes Gelenk (12) verbunden ist; **dadurch gekennzeichnet, daß** die die Räder (3) tragenden Radträger (11) gelenkig mit den hinteren Enden der zwei gekreuzten, die Hinterfüße (2) mit den Vorderfüßen (6) verbindenden Traversen (8 und 9) verbunden sind.

## Revendications

1. Poussette pliable pour enfants comprenant un châssis qui présente sur ses pattes arrières les correspondantes roues, dans laquelle un support (11) des roues (3) s'accouple à l'extrémité inférieure des pattes arrières (2) au moyen d'une articulation (12) qui permet le pliage de celui-là par rapport à la patte (2) lors du pliage de la poussette, **caractérisée en ce que** les supports (11) des roues (3) sont unis de façon articulée aux extrémités postérieures des deux traverses (8 et 9) croisées qui relient les pattes arrières (2) aux pattes avant (6).
